# EUROPÄISCHE PATENTANMELDUNG

(11) **EP 1 006 331 A1**
(43) Veröffentlichungstag der Anmeldung: **07.06.2000**
(21) Anmeldenummer: 99250429.0
(22) Anmeldetag: 03.12.1999
(51) Int. Cl.: F28D 20/00

(54) **Oberflächennahe thermische Speichersysteme mit Erdwärmetauschersonden**

(30) Priorität: 03.12.1998 DE 19856633
(71) Anmelder: Klemm, Peter, 10365 Berlin (DE); Lohrmann, Norbert, 01458 Ottendorf, Okrilla (DE); Reichelt, Burkhard, 15517 Fürstenwalde (DE)
(72) Erfinder: Klemm, Peter, 10365 Berlin (DE); Lohrmann, Norbert, 01458 Ottendorf, Okrilla (DE); Reichelt, Burkhard, 15517 Fürstenwalde (DE)

(57) **Zusammenfassung**

Die Erdwärmetauschersonden (nachfolgend EWTS genannt) dienen zum Aufbau oberflächennaher, thermischer Speichersysteme für Solarenergie bzw. als komplette Wärmequelle für Wärmepumpen.

Mit diesen EWTS kann thermische Energie in jeglicher Form aus dem Erdreich entzogen oder eingebracht bzw. aus diesem wieder entzogen werden.

Die Ausführungen erfolgen als rechts- oder linksdrehende spiralförmige Leitungssysteme (20), die als kompakte, in sich geschlossene Baugruppen hergestellt werden und bei Durchströmung mit einer Wärmeträgerflüssigkeit das Einbringen und den Entzug von thermischer Energie ins Erdreich sowie in Beton ermöglichen.

## Beschreibung

Die Erfindung betrifft ein Verfahren und eine Vorrichtung zum Wärmeaustausch von und zum Erdreich insbesondere zur Nutzung von Sonnenenergie.

Es gibt ein Bestreben zur Nutzung von Sonnenenergie auf Grund begrenzter und sich stets verteuernder konventioneller Energieträger oder politischer Vereinbarungen und Vorgaben.

Die für ein Gebäude benötigte Wärmeenergie kann zu einem beträchtlichen Teil mit Solar-Absorbern gedeckt werden. Im Allgemeinen wird die im Warmwasserbereiter nicht nutzbare Temperatur wieder zum Kollektor zurück gepumpt. Diese überschüssige Wärme läßt sich durch technisch angelegte Speichersysteme abspeichern, um später genutzt zu werden.

Aus der Fachliteratur (z.B: Planungsanleitung der Siemens-Wärmepumpe/Dimpelx, "Wärme aus Sonne und Erde" von H. Schulz (3. Auflage, 1995) sind vertikal verlegte U-Rohre bekannt, die die Wärme einer durchlaufenden Flüssigkeit an die Umgebung übertragen. Die Wärme wird dann bei Bedarf wieder zurück übertragen. Speicher mit 2,5 kW erfordern Tiefenbohrungen von 40 - 60 m. Der Aufwand für solche Bohrungen ist enorm und für die gewinnbare Energie wirtschaftlich kaum vertretbar. Dem eingesparten Bohraufwand steht jedoch der Aufwand für das Material und der Vergrößerung der nutzbaren Rohrlänge gegenüber. Wenn weniger tiefe Bohrungen realisiert werden müssen, ist um die Leistung beizubehalten, die gleiche Anzahl Wärmetauscherrohr einzuarbeiten. Das heißt aber, es müssen mehrere Bohrlöcher z.B. 4 x 10 m Tiefe, statt 1 x 40 m Tiefe angelegt werden. Dies erhöht aber die Bohrkosten, da das Bohrgerät zusätzlich 3 x umgesetzt werden muß.

Aus der WO 97/10474 ist bekannt, Wärmeenergie über ein horizontal angeordnetes Rohrschlangennetz zu übertragen. Die zuerst gespeicherte Wärme wird später mit Wärmetauschern wieder entnommen. Dieser horizontale Feststoffwärmetauscher weist vorteilhafterweise für eine gute Effektivität teure und aufwendige Einrichtungen wie Metallpakete oder bodenseitige Wärmedämmschicht auf. Zumindest erfordert die flächendeckende Vernetzung unterhalb eines Gebäudes einen erheblichen Aufwand. Neben dem Aufbaggern oder Aufschieben dürfte es erschwerend sein, eine derartige Anlage möglichst wartungsfrei zu installieren.
Deshalb ist auch das Erstellen dieser Wärmespeicher aufwendig, insbesondere unter bereits bestehenden Häusern. Darüber hinaus gehen die gerade im Sommer Kälte spendenden Räume zur Lagerung von Getränken, Obst, Gemüse u.s.w. verloren, wenn der Abstand des Wärmetauschers zum Kellerboden zu gering ausfällt. Für 2,5 kW sind bei horizontaler Verlegung ca. 100 m Rohr der Qualität 40 x 3,7 PE zu verlegen.

Aus der DE - OS, Nr.: 1601325 vom 07.01.1971, Seite 2, Zeile 20, ist bekannt, dass es ebenfalls möglich ist, Wärmeenergie über ein Verdampferaggregat einer direktverdampfenden Wärmepumpe oder einem wärmenutzenden Prozeß zur Verfügung zu stellen.

Aus der Patentanmeldung EP, Nr.: 0189733 A 1, vom 01.02.1985, Seite 1, Zeile 16, ist weiterhin bekannt, dass die Wärmeenergie für eine Sole - Wasser - Wärmepumpe über speziell ausgebildete Pfahlgründungen unter dem Gebäude dem Erdreich entnommen werden kann.

Aus der DE - OS, Nr.: 3149636 A 1, vom 15.12.1981, Seite 1, Zeile 1, ist weiterhin bekannt, dass Sole - Wasser - Wärmepumpen über Wärmetauscher aus korrosionsbeständigem Material, die in eine grundwasserführende Schicht eingebaut sind, versorgt werden können.

Aus der DE - OS, Nr.: 3913429 A 1, vom 24.04.1989, Seite 6, Zeile 30, ist weiterhin bekannt, dass die Kältequelle durch ein verrohrtes brunnenartig ausgehobenes Erdloch (1,5 x 12 m) versorgt werden kann.

Der Erfindung liegt daher die Aufgabe zugrunde, das Einrichten von Erdwärmetauschern zu vereinfachen und effektivere Erdwärmetauscher bereitzustellen.

Erfindungsgemäß erfolgt eine Verkürzung der Bohrlöcher durch einen intensivierten Wärmeaustausch mit spiralförmiger Anordnung der Leitungssysteme.

Der reversible Wärmetausch pro Bohrloch, d.h. sowohl speichern wie auch Wiederentnehmen von Wärme wird enorm gesteigert, wenn Leitungsspiralen in verkürzte Bohrlöcher eingesetzt werden.

Somit werden EWTS mit erhöhter Effektivität und verringertem Bohraufwand bereitgestellt.

Die EWTS erfüllen alle Anforderungen an bisherige Erdwärmetauscher z.B. Vorwärmen von Brauchwasser bzw. Heizungswasser, Kältequellen für Klimaanlagen. Darüber hinaus ist ihre Verwendung zum Trocknen von feuchtem Mauerwerk geeignet.

Die EWTS erschließen oberflächenah ein großes Erdvolumen, wobei durch die spiralförmige Anordnung innerhalb der EWTS im Gegensatz zu den Horizontal- und Vertikalspeichern sofort ein räumlicher Wärmeenergieaustausch erfolgt.

Die EWTS weist wenigstens eine Spirale aus einem spiralförmig ausgebildeten Rohr auf.

Der Wärmeaustausch erfolgt im wesentlichen über Spiralleitungen.

Hierfür werden Löcher gebohrt und/oder Gräben ausgehoben, EWTS eingesetzt und nach dem Einsetzen der EWTS ( in der Regel mit dem Bohrgut ) verfüllt.

Bei der Nutzung, z. B. für eine Sole - Wasser - Wärmepumpe, wird zur Erzielung einer definierten Kälteleistung eine bestimmte Anzahl der o.g. EWTS zu einem Sondenfeld zusammengestellt.

Die Erfindung wird im bezug auf die Zeichnungen anhand eines Ausführungsbeispiels erklärt.

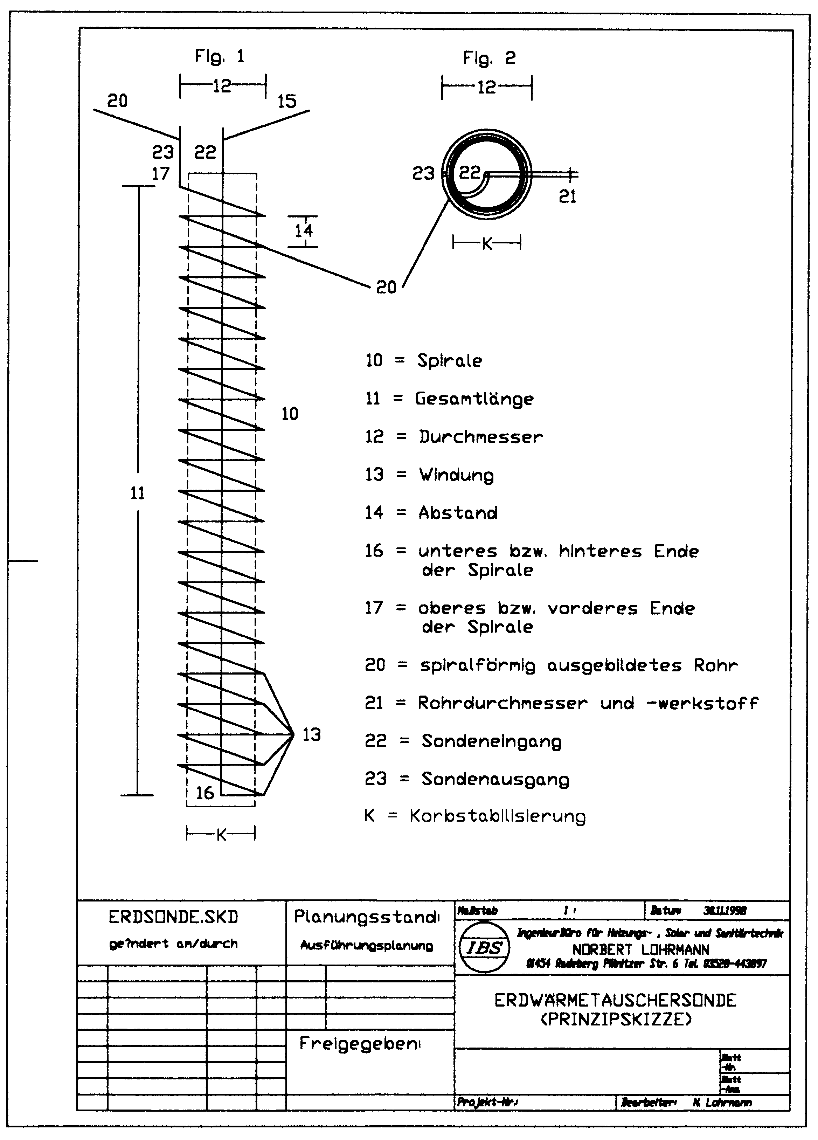

Fig. 1 zeigt schematisch eine Wärmetauscherspirale in Seitenansicht
Fig. 2 zeigt schematisch eine Wärmetauscherspirale in Draufsicht

EWTS bestehen aus einem oder mehreren spiralförmig ausgebildetem Rohren (20). Die EWTS sind in der Erde in Bohrlöchern oder Gräben eingesetzt. Die Bohrlöcher werden anschließend verfüllt (in der Regel mit dem Bohrgut).
Als Rohrleitung eignen sich alle korrosionsbeständigen Rohre z.B. PVC, PE und Polybutylen.

EWTS mit einem Rohrdurchmesser (21) von 25 mm und einem Abstand (14) der Windungen (13) von 5 cm weisen eine zehnfache Wärmeübertragungsfläche gegenüber einem einfachen senkrechten Rohr auf.

Das Rohr hat einen äußeren Durchmesser von 12 bis 70 mm. Die Länge der Spirale beträgt 0,5 bis 6 m. Der Durchmesser (12) der Spirale (10) beträgt 150 bis 500 mm. Die Spirale hat Windungen (13), deren Abstand (14) zueinander 1 bis 8mal so groß ist wie der äußere Rohrdurchmesser(21).

Vom Sondeneingang (22) erstreckt sich eine, innerhalb der Spirale (10) verlaufende senkrechte Vorlaufleitung bis zum unteren bzw. hinteren Ende (16) der Spirale (10). Der Ausgang (23) befindet sich entsprechend am oberen bzw. vorderen Ende (17) der Spirale (10).

Als die die Spirale (10) durchfließende Wärmeübertragungsflüssigkeit eignet sich Wasser, das mit einem Gefrierschutzmittel versetzt werden kann, um die technische Sicherheit und die Einsatzbreite zu vergrößern.

Das Leitungssystem ist mit einer Wärmenutzungsanlage, Z. B. Klimaanlage, Wärmepumpe, Solarsystem, BHKW etc., verbunden.

Ein Sondenfeld als Verteileranbindesystem mit 12 EWTS und einer Gesamtlänge (11) von je 2 m und einem Rohrdurchmesser (21) von 25 mm, einem Abstand (14) von 50 mm und einem Durchmesser (12) von 320 mm, leistet 8,4 kW Kälteleistung.

Der Platzbedarf für dieses Sondenfeld beträgt bei einem Sondenabstand von 2 m ca. 50 m².

## Patentansprüche

1. Erdwärmetauscher ( EWTS genannt ), dadurch gekennzeichnet, daß die EWTS wenigstens eine Spirale (10) aufweist.

2. EWTS nach dem Anspruch 1., dadurch gekennzeichnet, daß die Länge (11) der Spirale (10) 0,5 bis 6 m beträgt.

3. EWTS nach einem der Ansprüche 1, oder 2., dadurch gekennzeichnet, daß der Durchmesser (12) der Spirale (10) 150 bis 500 mm beträgt.

4. EWTS nach einem der Ansprüche 1. - 3., dadurch gekennzeichnet, daß die Spirale (10) wenigstens 5 Windungen (13) aufweist.

5. EWTS nach einem der Ansprüche 1. - 4., dadurch gekennzeichnet, daß die Spirale (10) Windungen (13) aufweist, deren Abstand (14) zueinander 1 bis 8 mal so groß ist wie der äußere Rohrdurchmesser (21).

6. Verfahren zum reversiblen unterirdischen Wärmeaustausch, dadurch gekennzeichnet, daß der Wärmeaustausch im wesentlichen über EWTS erfolgt.

7. Verfahren nach dem Anspruch 6., dadurch gekennzeichnet, daß bis zu 4 m lange Löcher gebohrt, oder Gräben ausgehoben werden, in die die EWTS eingesetzt werden.

8. Verfahren nach einem der Ansprüche 6. oder 7., dadurch gekennzeichnet, daß die Löcher mit einem Durchmesser (12) von 150 bis 500 mm gebohrt werden.

9. Verfahren nach einem der Ansprüche 6. bis 8., dadurch gekennzeichnet, daß die Löcher nach dem Einsetzen der EWTS, insbesondere mit dem Bohrgut wieder verfüllt werden.
